# EUROPÄISCHE PATENTANMELDUNG

(11) **EP 1 050 574 A2**
(43) Veröffentlichungstag der Anmeldung: **08.11.2000**
(21) Anmeldenummer: 00109007.5
(22) Anmeldetag: 26.04.2000
(51) Int. Cl.: C11B 9/00

(54) **Minz- und/oder Fruchtaromakompositionen**

(30) Priorität: 03.05.1999 DE 19920147
(71) Anmelder: HAARMANN & REIMER GMBH, D-37601 Holzminden (DE)
(72) Erfinder: Güntert, Matthias, Dr., Ridgewood, NJ 07450 (US); Kindel, Günter, 37671 Höxter (DE); Koppe, Volkmar, 37603 Holzminden (DE); Lambrecht, Stefan, Dr., 37603 Holzminden (DE); Surburg, Horst, Dr., 37603 Holzminden (DE)
(74) Vertreter: Zobel, Manfred, Dr.

(57) **Zusammenfassung**

In Minz- und/oder Fruchtaromakompositionen haben 8-Ocimenylester eine aromaverstärkende Wirkung.

## Beschreibung

Die Erfindung betrifft Minz- und/oder Fruchtaromakompositionen, die 8-Ocimenylester enthalten und ihre Verwendung in Nahrungs- und Genußmitteln oder zur Mundhygiene.

In der Parfüm- und Aromenindustrie besteht ein großer Bedarf an Stoffen, die in der Lage sind, in Parfüm- und Aromakompositionen solche Naturstoffe ganz oder teilweise zu ersetzen, die wegen ihrer mühsamen Art der Gewinnung teuer und nicht uneingeschränkt verfügbar und darüber hinaus in ihren Eigenschaften beträchtlichen naturbedingten Qualitätsschwankungen unterworfen sind.

Besonders interessant sind solche Stoffe dann, wenn sie nicht nur herausragende organoleptische (d.h. nur mit den Sinnen wahrnehmbare) Eigenschaften besitzen, sondern wenn sich mit ihnen auch wegen ihrer Stärke und Ergiebigkeit bemerkenswerte Effekte bei geringsten Dosierungen erzielen lassen.

In zunehmendem Maße sind in der Aromen- und Lebensmittelindustrie aber auch Stoffe wichtig, die neben der Eigenschaft, einen bestimmten Geruch und Geschmack zu verleihen, zusätzliche Eigenschaften aufweisen. Dies können zum Beispiel bestimmte Reize sein, die über den Trigeminus-Nerv geleitet und so wahrgenommen werden. Es können aber auch Effekte sein, durch die Geruchs- und Geschmacksempfindungen gehemmt oder verstärkt werden.

Es wurden Minz- und/oder Fruchtaromakompositionen gefunden, die 8-Ocimenylester der Formel 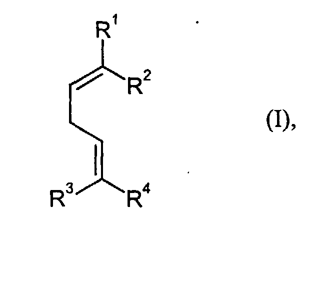 worin
einer der beiden Reste R¹ und R² für Methyl und der andere Für Vinyl steht
   und
einer der beiden Reste R³ und R⁴ für Methyl und der andere für 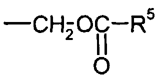 steht, wobei
   - R⁵: Wasserstoff, Alkyl oder Alkenyl, insbesondere C₁-C₆-Alkyl oder C₂-C₆-Alkenyl bedeutet,
enthalten.

Bevorzugt werden Minz- und/oder Fruchtaromakompositionen, die 8-Ocimenylester der Formel 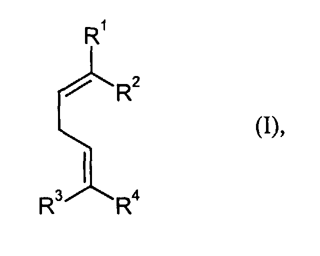 worin
einer der beiden Reste R¹ und R² für Methyl und der andere für Vinyl steht
   und
einer der beiden Reste R³ und R⁴ für Methyl und der andere für 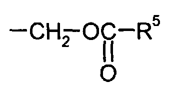 steht,
   wobei
   - R⁵: Wasserstoff, Methyl, Ethyl, n-Propyl, Iso-Propyl, n-Butyl, sek.-Butyl, iso-Butyl, tert.-Butyl oder 2-Butenyl bedeutet,
enthalten.

Im besonderen bevorzugt werden Minz- und/oder Fruchtaromakompositionen, die 8-Ocimenylester der Formeln 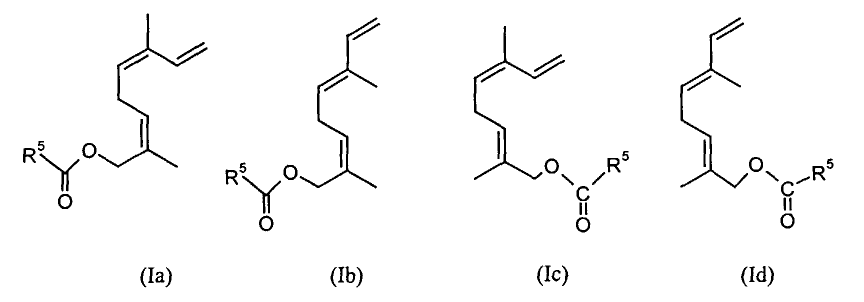 worin
- R⁵: Wasserstoff, Methyl oder Ethyl bedeutet,
enthalten.

Die 8-Ocimenylester verstärken überraschenderweise in Minz- und/oder Fruchtaromakompositionen das Geruchs- und Geschmacksempfinden.

8-Ocimenylester für die erfindungsgemäßen Minz und/oder Fruchtaromakompositionen können hergestellt werden, indem 6-Ocimenylchlorid der Formel 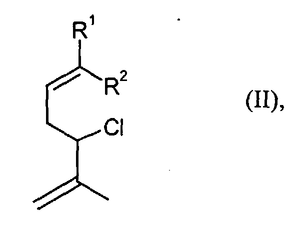 worin
- R¹ und R²: die oben angegebenen Bedeutungen haben,
mit dem Salz, insbesondere einem Alkalisalz, wie Na- oder K-Salz, einer aliphatischen Carbonsäuren, insbesondere einer C₂-C₇-Carbonsäure, umgesetzt wird.

Bevorzugt wird das Verfahren in einem organischen Lösungsmittel durchgeführt, insbesondere in einem dipolar-aprotischen Lösungsmittel. Als solche kommen beispielsweise in Frage Dimethylformamid, Dimethylsulfoxid, N-Methylpyrrolidon, Diethylenglycoldimethylether sowie deren Mischungen. Die Umsetzung erfolgt dabei vorzugsweise bei einer Temperatur von 50 bis 150°C, insbesondere bei 90 bis 120°C, gegebenenfalls unter Druck.

Das Verfahren, ausgehend von den Verbindungen der Formel (II) wird vorzugsweise in Gegenwart eines Alkalimetalljodides oder elementarem Iod, insbesondere in Gegenwart von NaI durchgeführt, wobei dieser Zusatz vorzugsweise in katalytischen Mengen, insbesondere in einer Menge von 0,01 bis 10 Gew.-% bezogen auf II, eingesetzt wird.

Bei dem Verfahren kann die Verbindung der Formel (II) als E- oder Z-Isomer oder als beliebiges E/Z-Gemisch eingesetzt werden.

Verwendet man das E/Z-Gemisch der Formel (II), also eine Mischung einer Verbindung (II), worin R¹ für Methyl und R² für Vinyl steht und einer Verbindung (II), worin R¹ für Vinyl und R² für Methyl steht, so erhält man eine Mischung, enthaltend die Verbindungen der Formeln (Ia)-(Id).

Besonders bevorzugt ist das Verfahren bei Verwendung von Natriumacetat als Salz einer aliphatischen Carbonsäure.

6-Ocimenylchloride können beispielsweise hergestellt werden, indem Ocimen der Formel 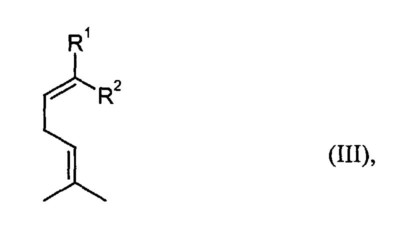 worin
- R¹ und R²: die oben angegebenen Bedeutungen haben,
mit hypochloriger Säure oder Sulfurylchlorid (SO₂Cl₂) umgesetzt wird.

Für die Reaktionen mit hypochloriger Säure wird diese üblicherweise in situ aus Salzen der hypochlorigen Säure durch Ansäuern erzeugt. Für die Herstellung von 6-Ocimenylchlorid (II) hat es sich als vorteilhaft erwiesen, hypochlorige Säure aus Natriumhypochlorit-Lösung durch Ansäuern mit Essigsäure freizusetzen. Die Reaktion mit Ocimen läuft dann in einem Zweiphasen-System ab; die Anwesenheit eines Lösungsmittels ist nicht erforderlich. Die Reaktionstemperatur kann zwischen 0 und 50°C liegen; bevorzugt ist ein Temperaturbereich von 10 bis 20°C.

Die Chlorierung wird mit Hilfe von Sulfurylchlorid vorzugsweise in Gegenwart einer Base ausgeführt, besonders bevorzugt in Gegenwart eines Alkalimetallcarbonates wie Natrium- oder Kaliumcarbonat, das insbesondere im Überschuß, bezogen auf Sulfurylchlorid, eingesetzt wird. Als mögliche Lösungsmittel dienen gegen Sulfurylchlorid inerte Verbindungen wie Kohlenwasserstoffe, vorzugsweise n-Hexan oder n-Heptan, wie Halogenkohlenwasserstoffe, vorzugsweise Dichlormethan oder Tetrachlorkohlenstoff oder wie Ether, vorzugsweise Methyl-tert.-butylether. Die Reaktionstemperatur liegt insbesondere bei 0 bis 50°C, bevorzugt ist ein Bereich von 20 bis 30°C.

Das Ocimen kann dabei als cis-Ocimen, als trans-Ocimen oder als cis/trans-Gemisch eingesetzt werden.

Bevorzugt setzt man ein Ocimen-cis/trans-Gemisch ein, wobei ein Gehalt von 50 bis 90 Gew.-% an trans-Isomeren und 50 bis 10 Gew.-% cis-Isomeren bevorzugt ist, woraus ein E/Z-Gemisch der Verbindung der 6-Ocimenylchloride (II) und daraus wiederum ein Gemisch isomerer 8-Ocimenylester der Formeln (Ia)-(Id) hergestellt werden kann.

Erfindungsgemäße Minzkompositionen enthalten Minzaromakomponenten und 8-Ocimenylester.

Minzaromakomponenten können beispielsweise sein:
Etherische Öle wie zum Beispiel Pfefferminzöle, Krauseminzöle, Mentha-Arvensis-Öle, Nelkenöle, Citrusöle, Zimtrindenöle, Wintergrünöle, Cassiaöle, Davanödle, Fichtennadelöle, Eucalyptusöle, Fenchelöle, Galbanumöle, Ingweröle, Kamillenöle, Kümmelöle, Rosenöle, Geraniumöle, Salbeiöle, Schafgarbenöle, Stemanisöle, Thymianöle, Wacholderbeeröle, Angelikawurzelöle, und die Fraktionen dieser Öle.

Einheitliche Aromastoffe (bei chiralen Verbindungen als Racemat oder als einzelnes Enantiomer oder als enantiomerenangereichertes Gemisch) wie zum Beispiel Menthol, Menthon, Isomenthon, Menthylacetat, Menthofuran, Mintlacton, Eucalyptol, Limonen, Eugenol, Pinen, Sabinenhydrat, 3-Octanol, Carvon, gamma-Octalacton, gamma-Nonalacton, Germacren-D, Viridiflorol, 1,3E,5Z-Undecatrien, Isopulegol, Piperiton, 3-Octylacetat, Isoamylisovalerianat, Hexanol, Hexanal, cis-3-Hexenol, Linalool, alpha-Terpineol, cis und trans Carvylacetat, p-Cymol, Damascenon, Damascone, Dimethylsulfid, Fenchol, cis-4-Heptenal, Isobutyraldehyd, Isovaleraldehyd, cis-Jasmon, Anisaldehyd, Methylsalicylat, Myrtenylacetat, 2-Phenylethylalkohol, 2-Phenylethylisobutyrat, 2-Phenylethylisovalerat, Zimtaldehyd, Geraniol, Nerol.

Verbindungen mit physiologischem Kühleffekt wie zum Beispiel Menthol, Menthonglycerinacetal, Menthyllactat, substituierte Menthyl-3-carbonsäureamide (z.B. Menthyl-3-carbonsäure-N-ethylamid), 2-Isopropyl-N,2,3-trimethylbutanamid, substituierte Cyclohexancarbonsäureamide, 3-Menthoxypropan-1,2-diol, 2-Hydroxyethylmenthylcarbonat, 2-Hydroxypropylmenthylcarbonat, N-Acetylglycinmenthylester, Menthylhydroxycarbonsäureester (z.B. Menthyl-3-hydroxybutyrat), Menthylbernsteinsäureester, 2-Mercaptocyclodecanon, 2-Isopropyl-5-methylcyclohexyl-5-oxo-2-pyrrolidincarbonsäure.

Süßstoffe wie zum Beispiel Aspartam, Saccharin, Acesulfam-K, Sorbit; Xylit, Cyclamate (z.B. Natriumcyclamat), Sucralose, Alitam, Neotam, Thaumatin, Neohesperidin DC, Maltit, Lacht.

Bevorzugte Minzaromakomponenten sind:
Etherische Öle wie zum Beispiel Pfefferminzöle, Krauseminzöle, Mentha-Arvensis-Öle, Nelkenöle, Citrusöle, Wintergrünöle, Cassiaöle, Davanaöle, Fichtennadelöle, Eucalyptusöle, Fenchelöle, Galbanumöle, Ingweröle, Kamillenöle, Kümmelöle, Geraniumöle, Salbeiöle, Schafgarbenöle, Sternanisöle, Thymianöle, Wacholderbeeröle, Angelikawurzelöle, und die Fraktionen dieser Öle.

Einheitliche Aromastoffe (bei chiralen Verbindungen als Racemat oder als einzelnes Enantiomer oder als enantiomerenangereichertes Gemisch) wie zum Beispiel Menthol, Menthon, Isomenthon, Menthylacetat, Menthofuran, Mintlacton, Eucalyptol, Limonen, Eugenol, Pinen, Sabinenhydrat, 3-Octanol, Carvon, Isopulegol, Piperiton, 3-Octylacetat, Hexanol, Hexanal, cis-3-Hexenol, Linalool, alpha-Terpineol, cis und trans Carvylacetat, p-Cymol, Dimethylsulfid, cis-4-Heptenal, Isobutyraldehyd, Isovaleraldehyd, cis-Jasmon, Anisaldehyd, Methylsalicylat, 2-Phenylethylalkohol, 2-Phenylethylisobutyrat, 2-Phenylethylisovalerat, Zimtaldehyd, Geraniol, Nerol.

Verbindungen mit physiologischem Kühleffekt wie zum Beispiel Menthol, Menthonglycerinacetal, Menthyllactat, Menthyl-3-carbonsäure-N-ethylamid, 2-Isopropyl-N,2,3-trimethylbutanamid, 3-Menthoxypropan-1,2-diol, 2-Hydroxyethylmenthylcarbonat, 2-Hydroxypropylmenthylcarbonat, N-Acetylglycinmenthylester, Menthyl-3-hydroxybutyrat, Menthylbernsteinsäureester, 2-Isopropyl-5-methylcyclohexyl-5-oxo-2-pyrrolidincarbonsäure.

Süßstoffe wie zum Beispiel Aspartam, Saccharin, Acesulfam-K, Sorbit; Xylit, Cyclamate (z.B. Natriumcyclamat), Sucralose, Alitam.

Insbesondere bevorzugt werden die folgenden Minzaromakomponenten:
Etherische Öle wie zum Beispiel Pfefferminzöle, Krauseminzöle, Mentha-Arvensis-Öle, Wintergrünöle, und die Fraktionen dieser Öle.
Einheitliche Aromastoffe (bei chiralen Verbindungen als Racemat oder als einzelnes Enantiomer oder als enantiomerenangereichertes Gemisch) wie zum Beispiel Menthol, Menthon, Isomenthon, Menthylacetat, Menthofuran, Mintlacton, Eucalyptol, Limonen, Sabinenhydrat, Carvon, Isopulegol, Piperiton, 3-Octylacetat, Hexanol, Hexanal, cis-3-Hexenol, Linalool, alpha-Terpineol, cis und trans Carvylacetat, p-Cymol, Dimethylsulfid, cis-4-Heptenal, Isobutyraldehyd, Isovaleraldehyd, cis-Jasmon, Anisaldehyd, Methylsalicylat, 2-Phenylethylalkohol, Zimtaldehyd.

Verbindungen mit physiologischem Kühleffekt wie zum Beispiel Menthol, Menthonglycerinacetal, Menthyllactat, Menthyl-3-carbonsäure-N-ethylamid, 3-Menthoxypropan-1,2-diol, 2-Hydroxyethylmenthylcarbonat, 2-Hydroxypropylmenthylcarbonat, 2-Isopropyl-5-methylcyclohexyl-5-oxo-2-pyrrolidincarbonsäure.

Süßstoffe wie zum Beispiel Aspartam, Saccharin, Acesulfam-K, Sorbit; Xylit, Cyclamate (z.B. Natriumcyclamat), Sucralose, Alitam, Neotam.

Erfindungsgemäße Fruchtaromakompositionen enthalten Fruchtaromakomponenten und 8-Ocimenylester. Fruchtaromakomponenten können beispielsweise sein:
Etherische Öle wie zum Beispiel Citrusöle, Buccoblätteröle, Davanaöle, Cassiaöle, Cedernholzöle, Geraniumöle, Komfuselöle, Lemongrasöle, Moschuskörneröle, Rosenöle, Zimtrindenöle, Nelkenöle, Karottensamenöle, Macisöle, Massoirindenöle, Sandelholzöle, und Fraktionen davon. Extrakte wie zum Beispiel Fruchtsaftkonzentrate aus allen gängigen Früchten, Guaranaextrakte, Holunderblütenextrakte, Iris Absolues, Ginster Absolues, Jasmin Absolues, Lakritzauszug, Osmanthus Absolues, Iriswurzelauszug, Vanilleextrakte, Zichorienextrakte, Zimtextrakte, Boronia Absolues.
Destillate aus allen gängigen Früchten.
Einheitliche Aromastoffe (bei chiralen Verbindungen als Racemat oder als einzelnes Enantiomer oder als enantiomerenangereichertes Gemisch) wie zum Beispiel alle gängigen gesättigten und ungesättigten Fruchtester aus den niedrigen aliphatischen Säuren C₁-C₁₂ und den niedrigen Alkoholen C₁-C₁₂, die aliphatischen gesättigten und ungesättigten Säuren C₁-C₁₄, die aliphatischen gesättigten und ungesättigten Alkohole C₃-C₁₄, die aliphatischen gesättigten und ungesättigten Aldehyde C₂-C₁₄, die gesättigten und ungesättigten gamma-Lactone C₅-C₁₄, Damascenon, alpha-Jonon, beta-Jonon, Himbeerketon, 2,5-Dimethyl-4-hydroxy-3(2H)-furanon, Limonen, Linalool, Linalooloxid, Phenylacetaldehyd, Phenylessigsäure, 2-Phenylethanol, Maltol, Vanillin, Eugenol, 2-Methyl-4-propyl-1,3-oxathian, 3-Methylthiohexanol, 4-Methyl-4-mercapto-2-pentanon, Methyleugenol, Anethol, Anisalkohol, Anisaldehyd, Guajakol, Zimtalkohol, Zimtaldehyd, Citral, Citronellal, Citronellol, Nerol, Geraniol, Ethylvanillin, Benzylalkohol, alle gängigen Cinnamylester, alle gängigen Benzylester, Damascone, Diacetyl, Diethylmalonat, Dihydrocumarin, beta-7,8-Dihydrojonon, Dimethylanthranilat, Methylanthranilat, 2(5)-Ethyl-5(2)-methyl-4-hydroxy-3(2H)-furanon, Ethylmaltol, Eucalyptol, Farnesal, Famesol, Heliotropin, alle gängigen cis-3-Hexenylester, alpha-Iron, Menthol, Menthylacetat, Ethyldecadienoat, Methyldihydrojasmonat, Methylcinnamat, Ethylcinnamat, Methylsalicylat, Milchsäure, Myrcen, Nerylacetat, Geranylacetat, Nootkaton, 2,3-Pentandion, alle gängigen 2-Alkanone, 3-Thiohexanol, 8-Thiomenthan-3-on, Rosenoxid, 4-Ketoisophoron.

Bevorzugte Fruchtaromakomponenten sind:
Etherische Öle wie zum Beispiel Citrusöle, Buccoblätteröle, Davanaöle, Cassiaöle, Cedernholzöle, Lemongrasöle, Rosenöle, Zimtrindenöle, Nelkenöle, Karottensamenöle, Macisöle, Massoirindenöle, Sandelholzöle, und Fraktionen davon.
Extrakte wie zum Beispiel Fruchtsaftkonzentrate aus allen gängigen Früchten.
Destillate aus allen gängigen Früchten.
Einheitliche Aromastoffe (bei chiralen Verbindungen als Racemat oder als einzelnes Enantiomer oder als enantiomerenangereichertes Gemisch) wie zum Beispiel alle gängigen gesättigten und ungesättigten Fruchtester aus den niedrigen aliphatischen Säuren C₁-C₁₂ und den niedrigen Alkoholen C₁-C₁₂, die aliphatischen gesättigten und ungesättigten Säuren C₁-C₁₄, die aliphatischen gesättigten und ungesättigten Alkohole C₃-C₁₄, die aliphatischen gesättigten und ungesättigten Aldehyde C₂-C₁₄, die gesättigten und ungesättigten gamma-Lactone C₅-C₁₄, Damascenon, alpha-Jonon, beta-Jonon, Himbeerketon, 2,5-Dimethyl-4-hydroxy-3(2H)-furanon, Limonen, Linalool, Linalooloxid, Phenylacetaldehyd, Phenylessigsäure, 2-Phenylethanol, Maltol, Vanillin, Eugenol, 2-Methyl-4-propyl-1,3-oxathian, 3-Methylthiohexanol, 4-Methyl-4-mercapto-2-pentanon, Methyleugenol, Anethol, Anisalkohol, Anisaldehyd, Guajakol, Zimtalkohol, Zimtaldehyd, Citral, Citronellal, Citronellol, Nerol, Geraniol, Ethylvanillin, Benzylalkohol, alle gängigen Cinnamylester, alle gängigen Benzylester, Damascone, Diacetyl, Diethylmalonat, Dihydrocumarin, beta-Dihydrojonon, Dimethylanthranilat, Methylanthranilat, 2(5)-Ethyl-5(2)-methyl-4-hydroxy-3(2H)-furanon, Ethylmaltol, Heliotropin, alle gängigen cis-3-Hexenylester, alpha-Iron, Ethyldecadienoat, Methyldihydrojasmonat, Methylcinnamat, Ethylcinnamat, Methylsalicylat, Nootkaton, 8-Thiomenthanon-3, Rosenoxid, Ketoisophoron.

Insbesondere bevorzugt werden die folgenden Fruchtaromakomponenten:
Etherische Öle wie zum Beispiel Citrusöle, Buccoblätteröle, Cassiaöle, Cedernholzöle, Lemongrasöle, Karottensamenöle, Macisöle, Massoirindenöle, Sandelholzöle, und Fraktionen davon.
Extrakte wie zum Beispiel Fruchtsaftkonzentrate aus allen gängigen Früchten. Destillate aus allen gängigen Früchten.
Einheitliche Aromastoffe (bei chiralen Verbindungen als Racemat oder als einzelnes Enantiomer oder als enantiomerenangereichertes Gemisch) wie zum Beispiel alle gängigen gesättigten und ungesättigten Fruchtester aus den niedrigen aliphatischen Säuren C₁-C₁₂ und den niedrigen Alkoholen C₁-C₁₂, die aliphatischen gesättigten und ungesättigten Säuren C₁-C₁₄, die aliphatischen gesättigten und ungesättigten Alkohole C₃-C₁₄, die aliphatischen gesättigten und ungesättigten Aldehyde C₂-C₁₄, die gesättigten und ungesättigten gamma-Lactone C₅-C₁₄, Damascenon, alpha-Jonon, beta-Jonon, Himbeerketon, 2,5-Dimethyl-4-hydroxy-3(2H)-furanon, Limonen, Linalool, Phenylacetaldehyd, 2-Phenylethanol, Maltol, Vanillin, Eugenol, 2-Methyl-4-propyl-1,3-oxathian, 3-Methylthiohexanol, 4-Methyl-4-mercapto-2-pentanon, Anethol, Anisalkohol, Anisaldehyd, Guajakol, Zimtalkohol, Zimtaldehyd, Citral, Citronellal, Citronellol, Nerol, Geraniol, Ethylvanillin, Benzylalkohol, Anisaldehyd, alle gängigen Cinnamylester, alle gängigen Benzylester, Damascone, Diacetyl, Dihydrocumarin, beta-Dihydrojonon, Dimethylanthranilat, Methylanthranilat, 2(5)-Ethyl-5(2)-methyl-4-hydroxy-3(2H)-furanon, Ethylmaltol, Heliotropin, alle gängigen cis-3-Hexenylester, alpha-Iron, Ethyldecadienoat, Methyldihydrojasmonat, Methylcinnamat, Ethylcinnamat, Nootkaton, 8-Thiomenthanon-3, Rosenoxid, Ketoisophoron.
Es ist auch möglich, Minz- und Fruchtaromakompositionen sowie die verschiedenen Aromakomponenten gemeinsam einzusetzen.

Aus den Aromakompositionen und/oder Riechstoffkompositionen werden durch die Zugabe von Lösungsmittel und/oder Trägerstoffe (Adsorbens oder Feinverteilungsmittel) gebrauchsfertige Aromen, die üblicherweise in dieser verdünnten Form Lebensmitteln und Genußmitteln sowie Produkten für die Mundhygiene zugegeben werden. Diese gebrauchsfertigen Aromen können Zusatzstoffe und Hilfsstoffe enthalten. Als solche können angesehen werden Konservierungsstoffe, Farbstoffe, Antioxidantien, Fließmittel, Verdickungsmittel, etc.

In den erfindungsgemäßen Minz- und/oder Fruchtaromakompositionen liegt die eingesetzte Menge an 8-Ocimenylester in der Regel bei 0,01 Gewichtsteile bis 10 Gewichtsteile, insbesondere bei 0,1 Gewichtsteile bis 5 Gewichtsteile.

Die erfindungsgemäßen Minz- und/oder Fruchtaromakompositionen sowie gebrauchsfertigen Aromen können in flüssiger, sprühgetrockneter oder auch in verkapselter Form vorliegen.

Die sprühgetrocknete Form wird aus den flüssigen Kompositionen hergestellt, indem man eine Emulsion unter Zugabe von bestimmten Mengen eines Trägerstoffs, vorzugsweise Biopolymere wie Stärke, Maltodextrin und Gummi Arabicum, herstellt. Diese Emulsion wird in Sprühtrocknern durch Feinstverteilung bei gleichzeitiger Temperaturanwendung getrocknet. Es resultiert ein Pulver mit der gewünschten Beladung an flüssigem Aroma.
Die verkapselte Form wird ebenfalls aus den flüssigen Kompositionen durch Zugabe eines Trägerstoffs hergestellt. Es gibt verschiedenen Technologien, mit denen Aromakapseln hergestellt werden können. Die gängigsten sind die Extrusion, die Sprühgranulation und die Coazervation. Die Partikelgrößen reichen üblicherweise von 10 µm bis 5 mm. Die gängigsten Kapselmaterialien sind verschiedene Stärken, Maltodextrin, Gelatine. In diesen Kapseln ist das flüssige oder feste Aroma eingeschlossen und kann durch verschiedene Mechanismen wie Wärmeanwendung, ph-Verschiebung oder Kaudruck freigesetzt werden.

Derartige Aromen können im gesamten Nahrungs- und Genußmittelbereich sowie in Produkten für die Mundhygiene verwendet werden. Insbesondere können sie für die Aromatisierung von Fettmassen, Backwaren, Joghurt, Speiseeis, Süßwaren, Kaugummi, alkoholischen und nicht-alkoholischen Getränken, Tabak, Zahnpasta und Mundwässern verwendet werden. Die Dosierung derartiger Aromen liegt vorzugsweise bei 0,0005 bis 2 Gew.-%, insbesondere bei 0,01 bis 1 Gew.-%, bezogen auf das fertige Lebens- oder Genußmittel bzw. die Produkte für die Mundhygiene.

Ein Schwerpunkt der Verwendung dieser erfindungsgemäßen Aromen liegt auf ihrem Einsatz in Süßwaren, Kaugummi und Produkten für die Mundhygiene (Zahnpasta, Mundwässer). Die Minzaromen bestehen üblicherweise aus Pfefferminzölen (*Mentha piperita*), Mentha-Arvensis-Ölen und/oder Krauseminzölen (*Mentha spicata* und *Mentha cardiaca*) und deren Fraktionen unter Zusatz von synthetischen und natürlichen Aromastoffen und weiteren natürlichen Extrakten oder etherischen Ölen. Diese Minzaromen verleihen den entsprechend aromatisierten Lebensmitteln und Mundpflegemitteln einen minzigen Geruch und Geschmack und sorgen für Frische im Mundbereich und Atem. Ein wichtiger Teil des Geschmacksprofils von Pfefferminzölen (*Mentha piperita*) sind die süßen, heuartigen Noten (von manchen Testpersonen auch als Tabaknoten bezeichnet), die insbesondere bei der Aromatisierung von Süßwaren und Kaugummi erwünscht sind. Nachstehend ist das Geschmacksprofil eines reinen Pfefferminzöls in Kaugummi aufgeführt, das diese Aussage unterstreicht.

Geschmacksprofil eines Pfefferminzöles (*Mentha piperita*) in Kaugummi (zuckerfrei, Dosierung 1,2 %)

| Geschmacksprofil | Intensität (1-10) |
|---|---|
| Impact | 6 |
| Fülle | 8 |
| Frische | 6 |
| Kühle | 6 |
| Eukalyptus | 5 |
| Menthol | 5 |
| Menthon | 4 |
| Grün | 2 |
| Würzig | 6 |
| Tee | 8 |
| Heuig | 7 |
| Kamille | 5 |
| Blütig | 4 |
| Cumarin | 5 |
| Süß | 7 |
| Weich | 8 |
| Erdig | 1 |
| Pilzig | 1 |

Es wurde nun überraschend festgestellt, daß die erfindungsgemäßen Minzaromen, sobald sie dieEster des 8-Ocimenols (Ia)-(Id) enthalten, ausgesprochen verstärkende geschmackliche Effekte hervorrufen können. Während die 8-Ocimenylester (Ia)-(Id) in reiner Form die oben beschriebenen geruchlichen und geschmacklichen Eigenschaften 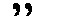 frisch, fruchtig, galbanumartig, grün, Ananas, estrig und blumig" aufweisen, sind sie in Minzkompositionen in der Lage, die 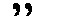 süßen" und 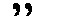 heuigen" Noten signifikant zu verstärken. Daneben wurde immer wieder festgestellt, daß von Testpersonen der Kommentar 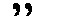 verstärkt geschmacklich den Eindruck der Natürlichkeit" gegeben wurde. Eine weitere Feststellung ist, daß die genannten Verbindungen in der Lage sind, bittere Noten zu vermindern.

### Beispiele:

Die Erfindung wurde in systematischen sensorischen Versuchen mit den synthetischen Minzaromakompositionen der nachstehend beispielhaft aufgeführten Formel erarbeitet, in denen die 8-Ocimenylester (Ia)-(Id) einmal zugesetzt und einmal aus der Komposition herausgelassen wurden.

| | |
|---|---|
| 1-Menthol | 350 |
| Menthon/Isomenthon | 280 |
| 1-Menthylacetat | 40 |
| Eucalyptol | 30 |
| Piperiton | 30 |
| Alpha-Terpineol | 5 |
| Linalool | 5 |
| Myrtenylacetat | 2 |
| Sabinenhydrat | 2 |
| Eugenol | 1 |
| Mintlacton | 1 |
| Cis-Jasmon | 0,5 |
| Cis-3-Hexenol | 0,3 |
| Dimethylsulfid | 0,2 |
| 3-Octanol | 0,2 |
| Isovaleraldehyd | 0,2 |
| Alkohol, 96 % v/v | 252,6 |
| Total | 1000 |

Wurde statt 0,1 - 1 g des Alkohols 1 g der Ocimenylester (Ia)-(Id) zugesetzt, wurde eine deutliche Verstärkung des sensorischen Eindrucks der 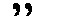 süßen" Noten sowie eine Erhöhung der 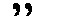 Natürlichkeit" festgestellt.

In zuckerhaltigen und nicht-zuckerhaltigen Kaugummibasen wurden die Minzaromen in praxisüblichen Konzentrationen (1 bis 1,5 Gew.-%) eingearbeitet und nach etwa 4 Wochen Lagerzeit verkostet. Der Vergleich der Minzaromen mit und ohne 8-Ocimenylester führte zu dem Ergebnis, daß die Verbindungen in den erfindungsgemäßen Aromen verstärkend wirken und insbesondere "die Süße verstärken, die Natürlichkeit des Geschmacks erhöhen, die Heunoten verstärken, das Menthol abdecken, abrundend wirken sowie die leichte Bitterkeit der Base überdecken helfen". Die sensorischen Kauversuche wurden bis zu 30 Minuten durchgeführt.

Die Versuche mit Mundpflegemitteln wurden insbesondere an Zahnpasten durchgeführt. Hier wurden sowohl Calciumcarbonat- wie auch Silicatbasen verwendet. Die Basen waren mit 0,2% Saccharin gesüßt. Auch hier wurden die synthetischen Minzaromen eingesetzt, in denen die 8-Ocimenylester einmal zugesetzt und einmal aus der Komposition herausgelassen wurden. Der Vergleich der Minzaromen mit und ohne die 8-Ocimenylester führte zu dem Ergebnis, daß die erfindungsgemäßen Minzaromen mit den Verbindungen aromaverstärkend wirken und insbesondere den Impact verstärken, die Süße verstärken, die Natürlichkeit des Geschmacks erhöhen, die Krautigkeit verstärken, die Schärfe des Menthols abdecken, abrundend wirken sowie die leichte Bitterkeit der Base überdecken helfen.

Dieser Feststellung kommt insbesondere bei Kaugummi eine große Bedeutung zu, da bekanntermaßen sowohl durch die Kaugummimasse wie auch durch das Menthol in Minzkompositionen zusammen mit der langen Kauzeit (teilweise mehr als eine halbe Stunde) von Testpersonen teils bittere Noten geschmeckt werden, die man unterdrücken möchte. Zusätzlich kann man feststellen, daß die erfindungsgemäßen Minzkomposition eine geschmacksverlängemde Wirkung besitzt.

Zusammenfassend ist festzustellen, daß die erfindungsgemäßen Minzaromen in Kaugummi die folgenden aromaverstärkenden Eigenschaften besitzen:
- Verstärkung der süßen, heuigen Noten
- Verstärkung der Natürlichkeit
- Verstärkung des Impacts
- Verminderung der Bitterkeit
- Geschmacksverlängerung des Pfefferminzgeschmacks
- Maskierung von unangenehmem Nachgeschmack.

Diese Eigenschaften traten insbesondere zwischen der 3. und 5. Minute des Kauvorgangs deutlich zutage, in denen für etwa 3 Minuten die Bitterkeit vermindert, die Süße verstärkt und dadurch auch die Reizung des Trigeminus-Nerves durch die Schärfe des Menthols abgemildert wurde.

In Minzkompositionen für Zahnpasta besitzen die erfindungsgemäßen Aromakompositionen die folgenden aromaverstärkenden Eigenschaften:
- Verstärkung der Natürlichkeit
- Verstärkung des Impacts
- Verminderung der Bitterkeit
- Abrundung der Menthol-Schärfe

## Patentansprüche

1. Minz-und/oder Fruchtaromakompositionen, enthaltend 8-Ocimenylester der Formel 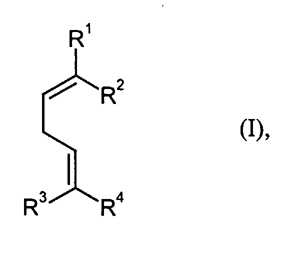 worin
einer der beiden Reste R¹ und R² für Methyl und der andere für Vinyl steht
und
einer der beiden Reste R³ und R⁴ für Methyl und der andere für 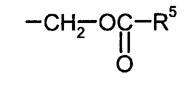 steht, wobei
R⁵ Wasserstoff, Alkyl oder Alkenyl, insbesondere C₁-C₆-Alkyl oder C₂-C₆-Alkenyl bedeutet.

2. Minz- und/oder Fruchtaromakompositionen nach Anspruch 1, enthaltend 8-Ocimenylester der Formel 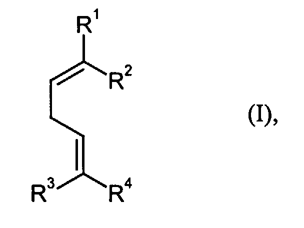 worin
einer der beiden Reste R¹ und R² für Methyl und der andere für Vinyl steht
und
einer der beiden Reste R³ und R⁴ für Methyl und der andere für 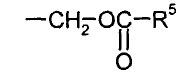 wobei
R⁵ Wasserstoff, Methyl, Ethyl, n-Propyl, Iso-Propyl, n-Butyl, sek.-Butyl, iso -Butyl, tert.-Butyl oder 2-Butenyl bedeutet.

3. Minz- und/oder Fruchtaromakompositionen nach den Ansprüchen 1 und 2, enthaltend 8-Ocimenylester der Formeln 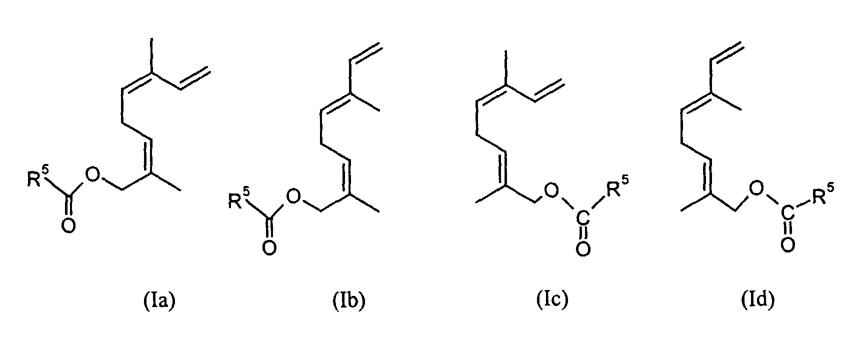 worin
R⁵ Wasserstoff, Methyl oder Ethyl bedeutet.

4. Minz- und/oder Fruchtaromakompositionen nach den Ansprüchen 1 bis 3, enthaltend 0,01 bis 10 Gew.-% 8-Ocimenylester bezogen auf die Komposition.

5. Verwendung der Minz- und Fruchtaromakompositionen nach den Ansprüchen 1 und 4 für Minz- und/oder Fruchtaromen in Nahrungsmitteln.

6. Verwendung der Minz- und Fruchtaromakompositionen nach den Ansprüchen 1 und 4 für Minz- und/oder Fruchtaromen in Genußmitteln.

7. Verwendung der Minz- und Fruchtaromakompositionen nach den Ansprüchen 1 und 4 für Minz- und/oder Fruchtaromen zur Mundhygiene.

8. Nahrungsmittel und/oder Genußmittel und/oder Mittel zur Mundhygiene enthaltend Minz und/oder Fruchtaromen nach Ansprüchen 1 bis 4.

9. Nahrungsmittel- und/oder Genußmittel und/oder Mittel zur Mundhygiene nach Anspruch 8 enthaltend 0,0005 bis 2 Gew.% Minz und/oder Fruchtaroma bezogen auf fertige Nahrungsmittel, Genußmittel oder Mittel zur Mundhygiene.
